# EUROPEAN PATENT APPLICATION

(11) **EP 2 469 073 A2**
(43) Date of publication of application: **27.06.2012**
(21) Application number: 10197446.7
(22) Date of filing: 30.12.2010
(51) Int. Cl.: F03B 17/06

(54) **Vertical axis reciprocating blade hydro power generator**

(30) Priority: 23.12.2010 US 426758 P
(71) Applicant: Iiapia, 2585 JH Den Haag (NL); Fransen, Paul, 2585 JH Den Haag (NL)
(72) Inventor: Fransen, Paul, 2585 JH, Den Haag (NL)

(57) **Abstract**

The present invention relates in general to the field of hydropower devices using a reciprocating or oscillating blade system. It aims at utilizing the currents of oceans and seas and rivers to generate electricity. Its distinguishing design makes it possible to realize a leverage factor, much larger than existing devices using a reciprocating or oscillating blade system, and by this it will introduce leverage as a main characteristic for harnessing the power of relatively slow river and ocean currents by devices using a reciprocating or oscillating blade system.

## Description

### TECHNICAL FIELD & BACKGROUND:

The present invention relates in general to the field of hydropower devices using a reciprocating or oscillating blade system in order to converse the kinetic energy of a water flow into electricity.

Present state-of-the art water powered electrical power generating systems are still based on the paradigm of relatively small water volume passage with relatively high speed. Most of these systems have the character of (adapted) turbines. The use of leverage power is not a dominant quality. Therefore these designs are not able to make sufficient use of the extensive power of the vast volumes of slow sea or river currents. The only exception is the patent-pending Leverage-Maximizing Vertical Axis Waterwheel Rotor (see US Prov. Appl no. US 61/32,701 and EPO no. EP10165597).

The advantage of the Leverage-Maximizing Vertical Axis Reciprocating Blade Hydro Power Generator compared to the Leverage-Maximizing Vertical Axis Waterwheel Rotor is its considerable smaller width regarding the water surface needed to operate. This makes it more appropriate to be installed in rivers or seaways where the available space has to be shared with other stakeholders with interests in transportation or leisure activities.

In the field of hydropower devices using a reciprocating or oscillating blade system, successful applications have stayed out. Probably also due to the fact that the importance of leverage effects was never seen as crucial.

The present invention utilizes a design which makes very large leverage effects possible, catching the pressure of vast volumes of slow streaming currents, deliberately using this leverage effect to deliver tremendous power to a central oscillating hub, being the input source for a transmission unit to transfer this power to one or more electric generators. This design is a new direction in the design of water powered electrical power generating systems, using reciprocating or oscillating blades.

By positioning the central axle vertically, using vertically flexible spokes connected to blades oscillating around a planetary axis parallel to the central axis and using blades, deliberately constructed to have adjustable buoyancy to support the construction, it is made possible to extend the leverage effect to such a scale that the use of leverage power becomes a dominant factor.

The design thereby operates with water flow from one direction, as normally found in rivers and ocean currents. Bumping posts force the blades to adjust themselves to a by internal or external stops controlled position, which makes the stream push the blades in the opposite direction as from where they were pushed by the stream before. This adjustment also powered by the pressure of the streaming water is made possible by the fact that on contact the bumping posts get the function of a second pivot point for the blades. This adjustment each time when the blades contact the bumping posts makes the blades reciprocate continuously in the open space between the bumping posts, causing the central hub to oscillate. As a one-line description the design can be called a "leverage maximizing reciprocating balanced floating-blade supported central oscillating hub hydropower device", but in the following the term "reciprocating blade device" is used.

The adjustment of the buoyancy of the blades to obtain a "balanced floating-blade" may take place when the reciprocating blade device is assembled or when maintenance is needed. In the field of devices utilized for harnessing currents to generate electricity this is a new application. Adjustable buoyancy itself is well known technology. Letting water in or blowing it out to achieve desired buoyancy is used in all kinds of marine applications. Therefore it is not described in detail, but only pointed out to be an essential component of this invention.

The reciprocating blade device is oscillating around a fixed pipe or pillar. This pillar can be driven into the bottom of a river, lake or ocean/sea, it can be mounted on a foundation on the bottom of a river, lake or ocean/sea; it can be mounted on a stream over-bridging construction and it can be mounted on a floating body anchored to the bottom of an ocean or river.

While the blades are always in the water, the hub spokes can be positioned above or below the water level. Positioned below the water level the design of the spoke is adapted to deliver minimal resistance to the water flow by its special shape. This special shape also provides a certain vertical flexibility to the spokes, comparable to the wings of large airplanes. Positioned above water level, the spokes are constructed to be strong enough to cope with the forces of the waves in extreme circumstances. The strength of this construction is dependent of the geographic situation. It must be evident that there is a difference between ocean/sea applications and applications in rivers.

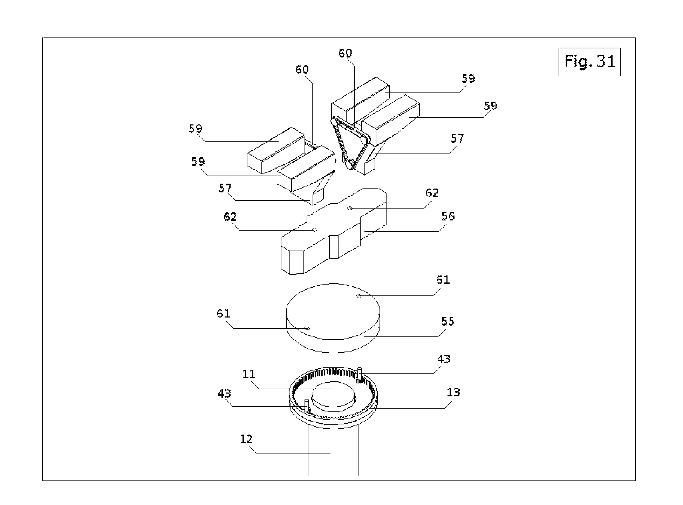

For further transmission of the oscillating power from the starting gear wheel to the electricity generators a transmission system in a housing constructed on the fixed central axis is needed. As such transmission systems and generators are well known technology they are not described in detail, but only pointed out to be natural components to make use of this invention. Examples of the build up of a complete power station using standard components applied in the windmill industry can be found in Fig. 31.

### BRIEF DESCRIPTION OF THE DRAWINGS:

The present invention will be described by way of exemplary embodiments, but not limitations, illustrated in the accompanying drawings in which like references denote similar elements, and in which:
FIG. 1 illustrates a drawing of a an axonometric view of a reciprocating blade device with 2 spokes below water level and with blade cutout, in accordance with one embodiment of the present invention.
FIG. 2 illustrates a drawing of a top view of a reciprocating blade device with 2 spokes below water level and with blade cutout, in accordance with one embodiment of the present invention.
FIG. 3 illustrates a drawing of a second top view of a reciprocating blade device with 2 spokes below water level and with blade cutout, in accordance with one embodiment of the present invention.
FIG. 4 illustrates a drawing of a third top view of a reciprocating blade device with 2 spokes below water level and with blade cutout, in accordance with one embodiment of the present invention.
FIG. 5 illustrates a drawing of a fourth top view of a reciprocating blade device with 2 spokes below water level and with blade cutout, in accordance with one embodiment of the present invention.
FIG. 6 illustrates a drawing of a fifth top view of a reciprocating blade device with 2 spokes below water level and with blade cutout, in accordance with one embodiment of the present invention.
FIG. 7 illustrates a drawing of a side view of a reciprocating blade device with 2 spokes below water level and with blade cutout, in accordance with one embodiment of the present invention.
FIG. 8 illustrates a drawing of an axonometric view of a reciprocating blade device with 2 spokes below water level, having the connection between spoke and parallel axle at the lower extremity of the parallel axle, in accordance with one embodiment of the present invention.
FIG. 9 illustrates a drawing of a side view of a reciprocating blade device with 2 spokes below water level, having the connection between spoke and parallel axle at the lower extremity of the parallel axle, in accordance with one embodiment of the present invention.
FIG. 10 illustrates a drawing of an axonometric view of a reciprocating blade device with 2 spokes below water level, having the connection between spoke and parallel axle at the upper extremity of the parallel axle, in accordance with one embodiment of the present invention.
FIG. 11 illustrates a drawing of a side view of a reciprocating blade device with 1 spokes below water level, having the connection between spoke and parallel axle at the upper extremity of the parallel axle, in accordance with one embodiment of the present invention.
FIG. 12 illustrates a drawing of an axonometric view of a reciprocating blade device with 2 spokes below water level, each spoke having a pair of oscillating blades, in accordance with one embodiment of the present invention.
FIG. 13 illustrates a drawing of a side view of a reciprocating blade device with 2 spokes below water level, each spoke having a pair of oscillating blades, in accordance with one embodiment of the present invention.
FIG. 14 illustrates a drawing of an axonometric view of a reciprocating blade device with 2 pairs of spokes below water level, in accordance with one embodiment of the present invention.
FIG. 15 illustrates a drawing of a side view of a reciprocating blade device with 2 pairs of spokes below water level, in accordance with one embodiment of the present invention.
FIG. 16 illustrates a drawing of an axonometric view of a reciprocating blade device with 2 spokes above water level, in accordance with one embodiment of the present invention.
FIG. 17 illustrates a drawing of a top view of a reciprocating blade device with 2 spokes above water level, in accordance with one embodiment of the present invention.
FIG. 18 illustrates a drawing of a side view of a reciprocating blade device with 2 spokes above water level, in accordance with one embodiment of the present invention.
FIG. 19 illustrates a drawing of an axonometric view of a reciprocating blade device with 2 pairs of spokes where of each pair of spokes one spoke is above water level and one spoke is below water level, in accordance with one embodiment of the present invention.
FIG. 20 illustrates a drawing of a side view of a reciprocating blade device with 2 pairs of spokes where of each pair of spokes one spoke is above water level and one spoke is below water level, in accordance with one embodiment of the present invention.
FIG. 21 illustrates a drawing of an axonometric view of the starting gear wheel and hinge construction as a part of the central hub of a reciprocating blade device with spokes above water level, in accordance with one embodiment of the present invention.
FIG. 22 illustrates a drawing of an axonometric view of the starting gear wheel being the upper part of the central hub of a reciprocating blade device with spokes below water level, in accordance with one embodiment of the present invention.
FIG. 23 illustrates a drawing of an axonometric view of an external gear type starting gear wheel being the upper part of the central hub of a reciprocating blade device, in accordance with one embodiment of the present invention.
FIG. 24 illustrates a drawing of an axonometric view of a bevel gear type starting gear wheel being the upper part of the central hub of a reciprocating blade device in accordance with one embodiment of the present invention.
FIG. 25 illustrates a drawing of an axonometric view of the hinge-2 joint between an above water level spoke and a parallel axle with blade, in accordance with one embodiment of the present invention
FIG. 26 illustrates a drawing of a top view of an internal stop device permitting a reciprocating blade to oscillate only in a predefined range around a parallel axle, in accordance with one embodiment of the present invention
FIG. 27 illustrates a drawing of a top view of an internal stop device at the moment of stopping the clockwise rotation of the reciprocating blade, in accordance with one embodiment of the present invention
FIG. 28 illustrates a drawing of a top view of an internal stop device at the moment of stopping the counter-clockwise rotation of the reciprocating blade, in accordance with one embodiment of the present invention
FIG. 29 illustrates a drawing of an axonometric view of an internal stop device permitting a reciprocating blade to oscillate only in a predefined range around a parallel axle, in accordance with one embodiment of the present invention
FIG. 30 illustrates a drawing of a sectional plane view of a below water level spoke, in accordance with one embodiment of the present invention
FIG. 31 illustrates a drawing of an application of this invention with main elements separated, showing one of the possibilities to utilize it to drive a multiple set of standard wind turbine generators.

### DETAILED DESCRIPTION OF ILLUSTRATIVE EMBODIMENTS:

Various aspects of the illustrative embodiments will be described using terms commonly employed by those skilled in the art to convey the substance of their work to others skilled in the art. However, it will be apparent to those skilled in the art that the present invention may be practiced with only some of the described aspects. For purposes of explanation, specific numbers, materials and configurations are set forth in order to provide a thorough understanding of the illustrative embodiments. However, it will be apparent to one skilled in the art that the present invention may be practiced without the specific details. In other instances, well-known features are omitted or simplified in order not to obscure the illustrative embodiments.

Various operations will be described as multiple discrete operations, in turn, in a manner that is most helpful in understanding the present invention; however, the order of description should not be construed as to imply that these operations are necessarily order dependent. In particular, these operations need not be performed in the order of presentation.

The phrase "in one embodiment" is used repeatedly. The phrase generally does not refer to the same embodiment, however, it may. The terms "comprising", "having" and "including" are synonymous, unless the context dictates otherwise.

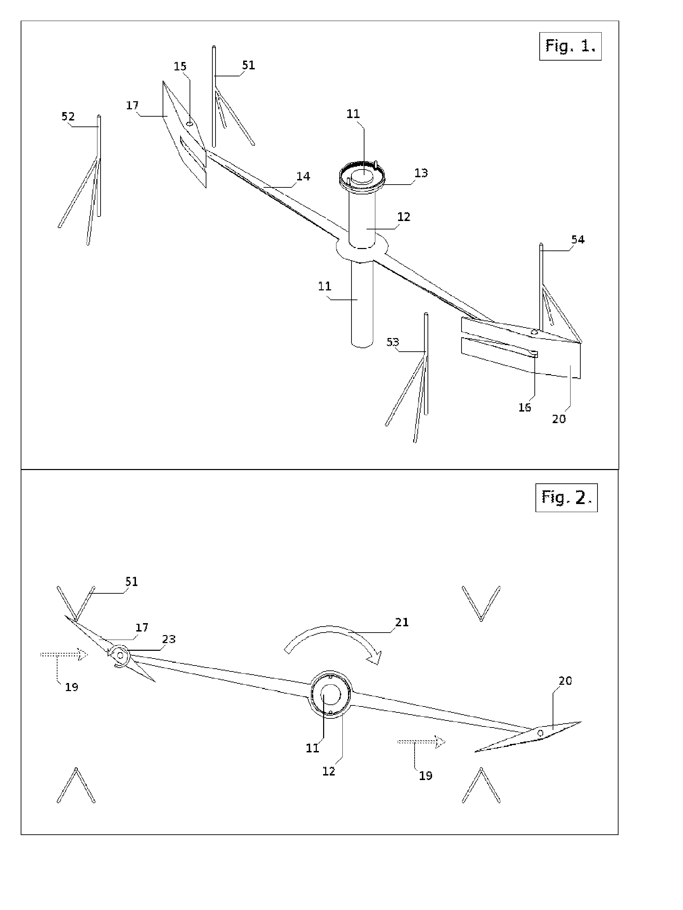

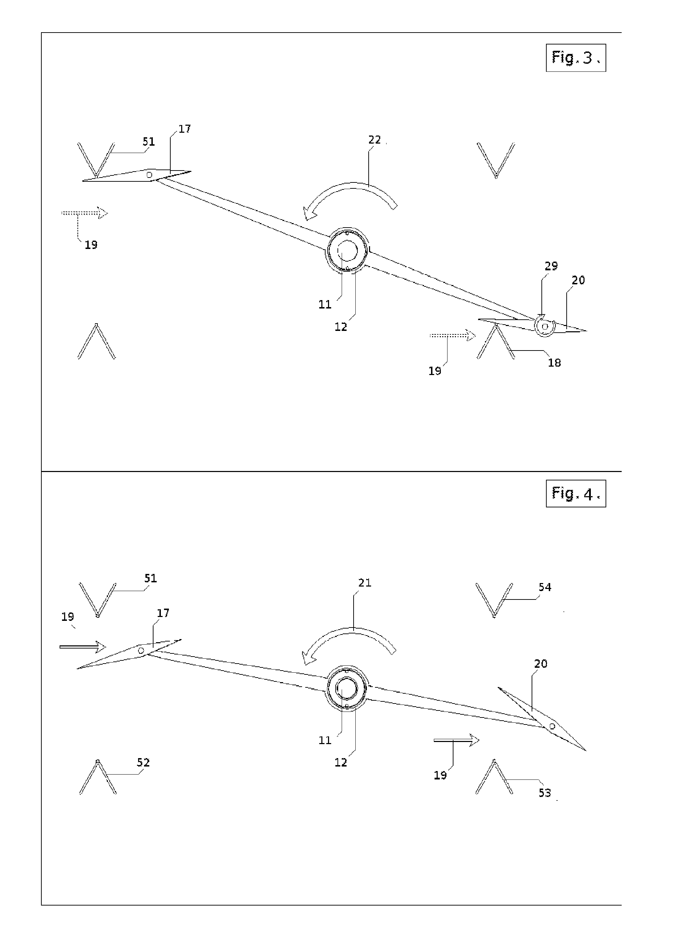

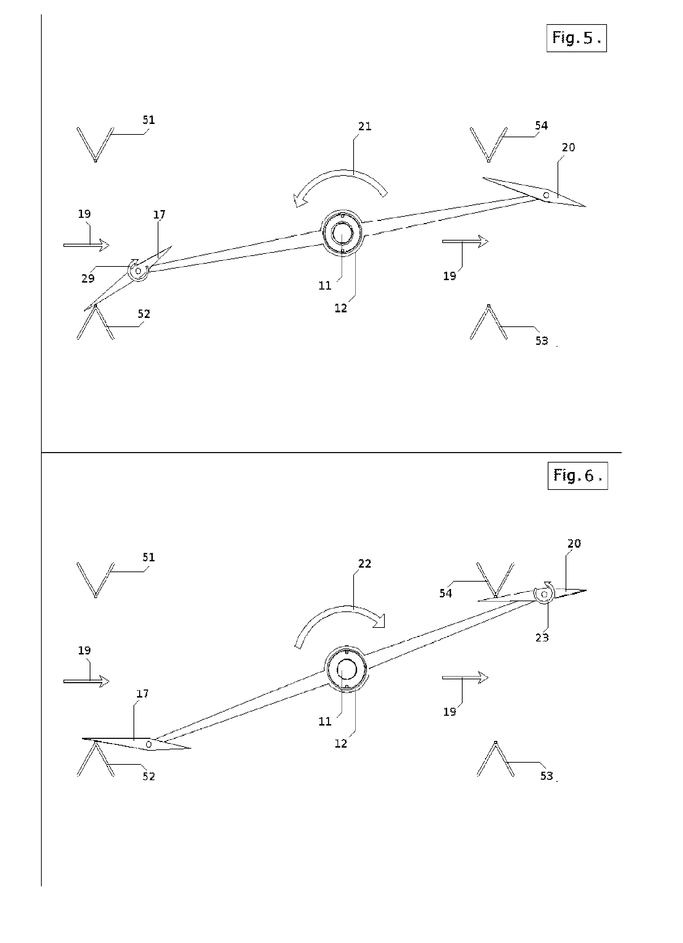

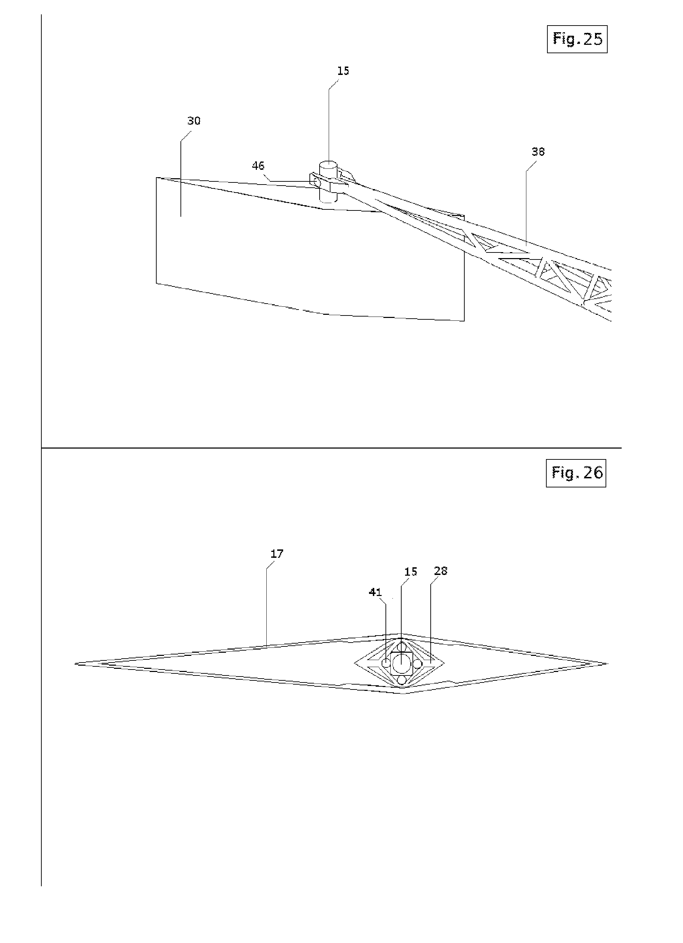

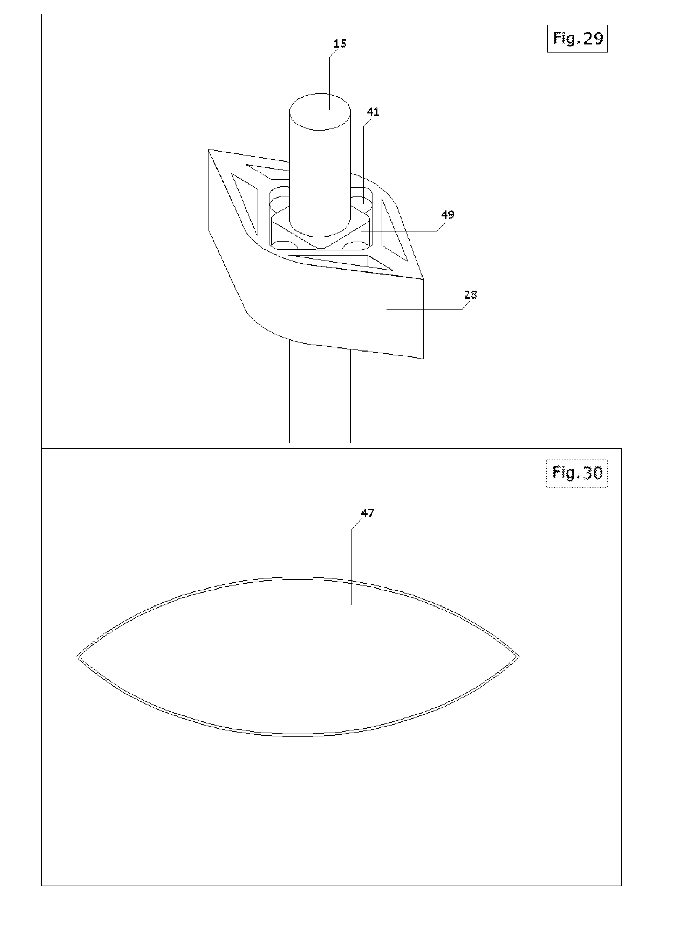

Now referring to FIG. 1, as in one embodiment of the present invention, shown is an axonometric view of a reciprocating blade device with 2 spokes below water level and with blades having a blade cutout 18 to facilitate the rotation. Shown is a fixed central axle 11 with oscillating hub 12, the upper ring 13 of the hub being the starting gear wheel to transmit power. Shown are the spokes 14, being fixed connected to the hub, but by their design and construction relatively flexible in upwards and downwards movement, like the wings of a large airplane. This flexibility is needed to cope with the underwater movement caused by waves at the surface. These spokes are shaped with a sharp edge at both sides (see Fig. 30) to minimize the resistance of the fluid. In this situation the connection between spoke and parallel axle 15 is at the middle 16 of the parallel axle. The parallel axles are equipped with blade-rotating-stops (see Figs. 26, 27, 28, 29) specially shaped to hold the floating blades 17, 20 in such a position to the spoke, that the fluid flow forces the blade to stay in that position while simultaneously pushing the blade and spoke aside, making the central hub 12 turn clockwise. This movement continues until the position of the blades are changed by the contact with the bumping posts 51, 53 making the floating blades 17, 20 still pushed by the fluid flow, rotate (see Fig 2 and 3) to a new position, which is also defined by the blade-rotating-stop and also stabilized by the pressure of the fluid flow (now on the other side of the blade). The force of the fluid flow will now push the blade and spoke in the opposite direction, away from the bumping post **51 ,** making the central hub **12** turn in the opposite direction counterclockwise. (see Fig 3 and 4), until the blades are repositioned again by the bumper posts **52, 54** on the other side of the reciprocating range (see Fig 5 and 6) causing the blade and spoke to force the central hub to change again its direction in turning. In this way the central hub is continuously oscillating around the fixed central axle.

Referring to FIG. 2 as in one embodiment of the present invention, shown is a top view of a reciprocating blade device with 2 spokes below water level and with blade cutout, the spoke hub **12** rotating clockwise **21** around the central axle **11.** The position of the balanced floating blades referring to the direction of the current **19** is as follows: The blade **17** most stream upwards is just in a position contacting the bumper post **51** that will force the blade **17,** still pushed by the stream, to rotate counterclockwise 23, until the internal stop ends the rotation, the blade being put in a position by which the stream will push it away from the bumping post **51** (see Fig 3).

Referring to FIG. 3 as in one embodiment of the present invention, shown is a top view of a reciprocating blade device with 2 spokes below water level and with blade cutout. The position of the balanced floating blades referring to the direction of the current **19** is as follows: The blade **17,** already repositioned by the bumping post **51,** and the blade **20** rotating clockwise **29** in contact with the bumping post **53** will both be forced away from the bumping posts **51, 53** by the current, making the spoke hub **12** rotate counterclockwise **22** around the central axle **11.**

Referring to FIG. 4 as in one embodiment of the present invention, shown is a top view of a reciprocating blade device with 2 spokes below water level and with blade cutout. This drawing illustrates the further rotation of spoke hub **12** counterclockwise **22** around the central axle **11,** the blades **17, 20** being hold in position by the blade-rotating-stops and the pressure of the stream.

Referring to FIG. 5 as in one embodiment of the present invention, shown is a top view of a reciprocating blade device with 2 spokes below water level and with blade cutout. The position of the balanced floating blades referring to the direction of the current **19** is as follows: The blade **17** most stream upwards is just in a position contacting the bumper post **52** that will force the blade, still pushed by the stream, to rotate clockwise **29 ,** until the internal stop ends the rotation, the blade being put in a position by which the stream will push it away from the bumping post **52** (see Fig 6).

Referring to FIG. 6 as in one embodiment of the present invention, shown is a top view of a reciprocating blade device with 2 spokes below water level and with blade cutout. The position of the balanced floating blades referring to the direction of the current **19** is as follows: The blade **17 ,** already repositioned by the bumping post **52,** and the blade **20** rotating counterclockwise **23** in contact with the bumping post **54** will both be forced away from the bumping posts **52, 54** by the current, making the spoke hub **12** rotate clockwise **22** around the central axle **11.** The top view drawings (Fig. 2 until Fig. 6 are exemplary for most of the top views concerning the reciprocating blade device variations with spokes below water level described hereafter. Therefore most of these variations will be shown only as axonometric views and side views.

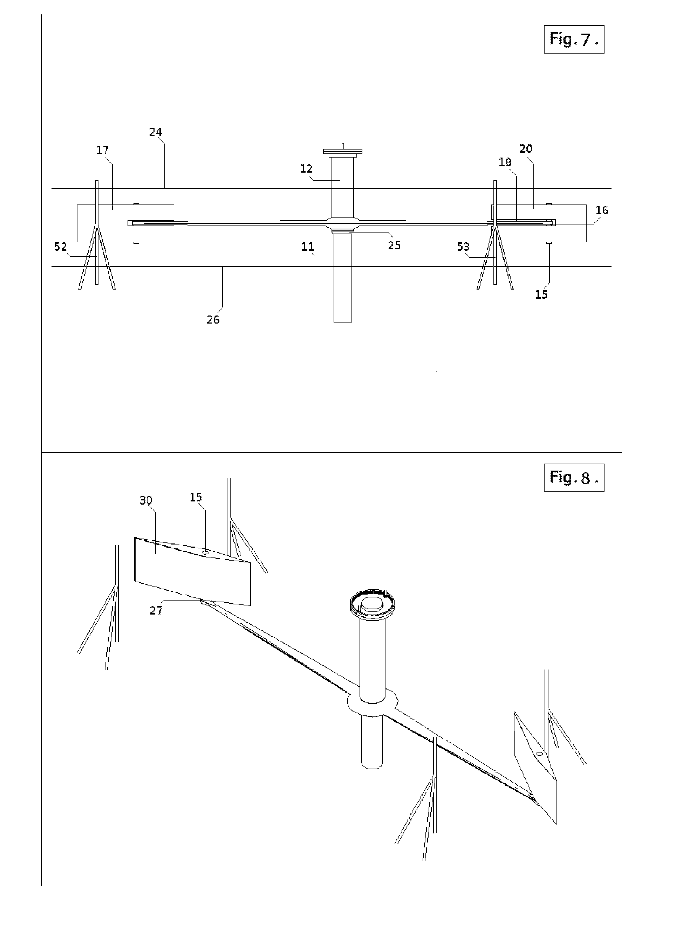

Referring to FIG. 7 as in one embodiment of the present invention, shown is a side view of a reciprocating blade device with 2 spokes below water level **24** having the connection between spoke and parallel axle at the middle **16** of the parallel axle **15,** the blades having a blade cutout **18** to facilitate the rotation. As shown the central oscillating hub **12** resting on a bearing ring device **25** attached to the fixed central axle 11 is partly above water level making it possible to construct the most vulnerable parts like the transmission system and the electric generators on a save distance from the water level. The fixed central axle **11** and the bumping posts **52, 53** are driven into the bottom **26.** The balanced floating blades **17, 20** are totally under water, making them less vulnerable to the forces of the waves on the surface. The buoyancy of the blades is adjusted in such a way that they compensate the sinking weight of the spokes and parallel axles, thus making the combination of spokes, parallel axles and blades in its totality almost weightless in their fluid surrounding. This adjustment also includes the right placement of ballast in the lower parts of the blades to stabilize their position as an upright stream catcher, and to avoid diagonal pressure on the parallel axles.

Referring to FIG. 8 as in one embodiment of the present invention, shown is an axonometric view of a reciprocating blade device with 2 spokes below water level, having the connection between spoke and parallel axle not at the middle, but at the lower extremity 27 of the parallel axle 15. This construction gives the balanced floating blade full freedom to rotate without interference of the spoke. The blade 30 does not need a special cutout to facilitate the free positioning of the blade. By this construction the blade can easily be lifted upwards and taken from the parallel axle when maintenance is needed.

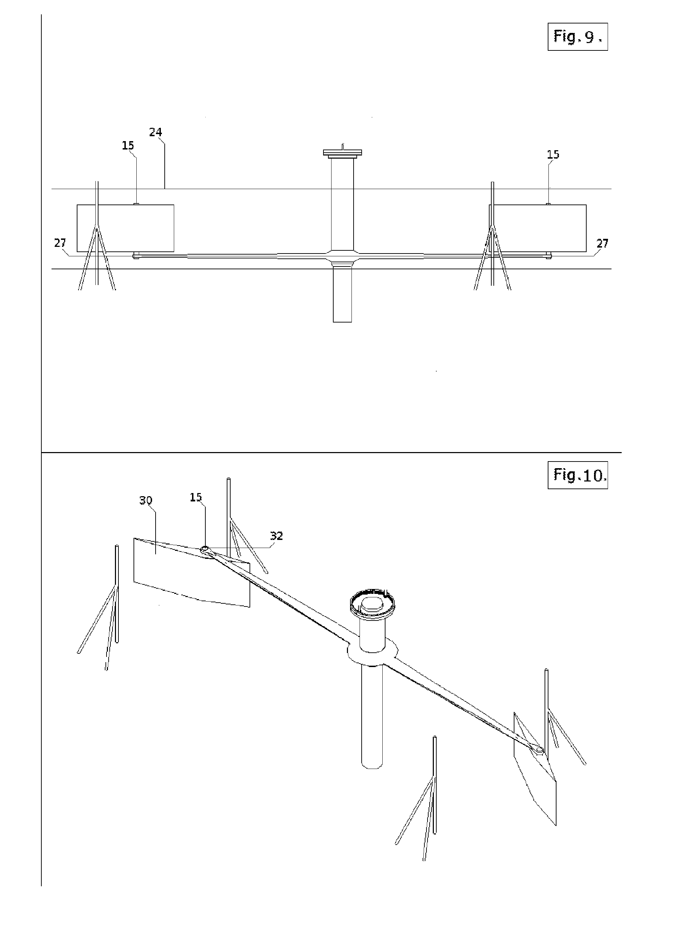

Referring to FIG. 9 as in one embodiment of the present invention, shown is a side view of a reciprocating blade device with 2 spokes below water level 24, having the connection between spoke and parallel axle not at the middle, but at the lower extremity **27** of the parallel axle **15.** Further the same explanations apply as used in reference to Fig. 7.

Referring to FIG. 10 as in one embodiment of the present invention, shown is an axonometric view of a reciprocating blade device with 2 spokes below water level, having the connection between spoke and parallel axle at the upper extremity **32** of the parallel axle **15.** This construction gives the balanced floating blade full freedom to rotate without interference of the spoke. The blade **30** does not need a special cutout to facilitate the free positioning of the blade. By this construction the blade can easily be sunken downwards and taken from the parallel axle when maintenance is needed.

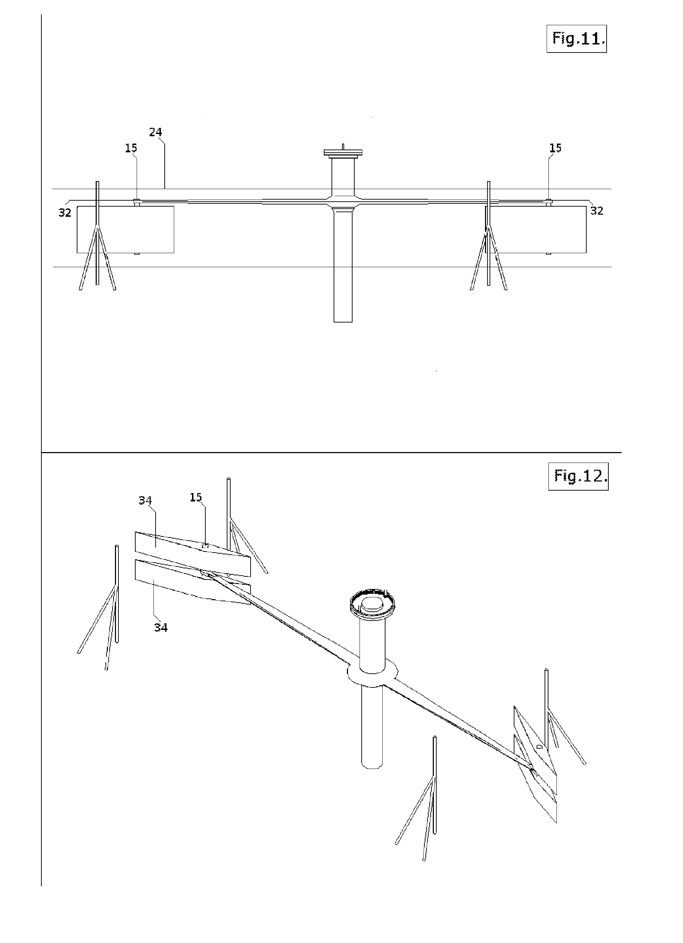

Referring to FIG. 11 as in one embodiment of the present invention, shown is a side view of a reciprocating blade device with 2 spokes below water level **24** having the connection between spoke and parallel axle **15** at the upper extremity **32** of the parallel axle. Further the same explanations apply as used in reference to Fig. 7.

Referring to FIG. 12 as in one embodiment of the present invention, shown is an axonometric view of a reciprocating blade device with 2 spokes below water level, each spoke having a pair of oscillating blades. This construction also gives the balanced floating blades full freedom to rotate without interference of the spoke. The blades **34** do not need a special cutout to facilitate the free positioning of the blade. By this construction the blades can easily be lifted upwards and downwards to be taken from the parallel axle **15** when maintenance is needed.

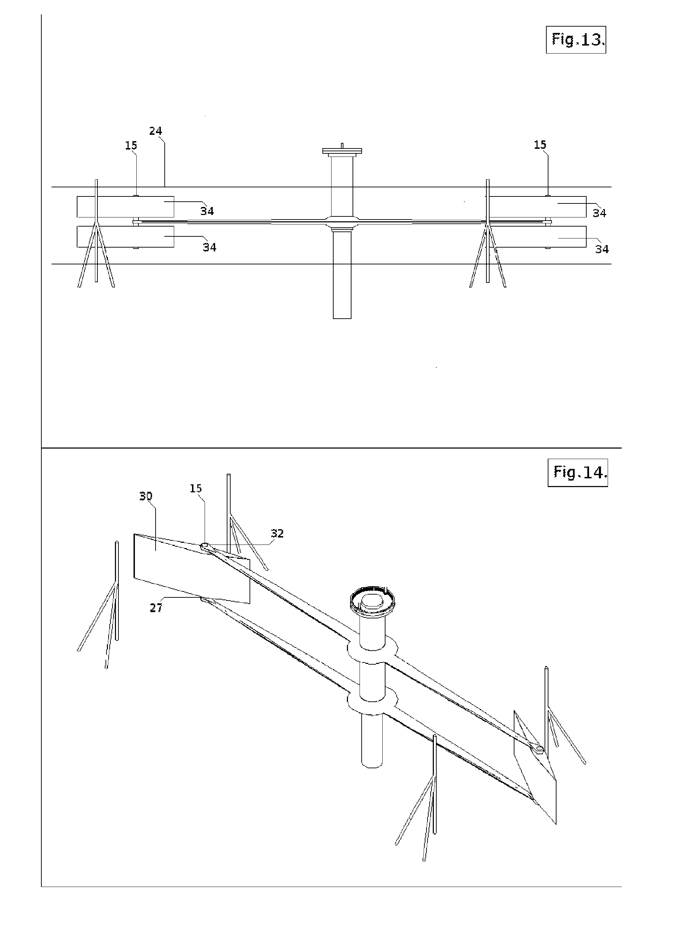

Referring to FIG. 13 as in one embodiment of the present invention, shown is a side view of a reciprocating blade device with 2 spokes below water level **24,** each spoke having a pair of oscillating blades, The connection between spoke and parallel axle is at the middle **16** of the parallel axle **15.** Further the same explanations apply as used in reference to Fig. 5.

Referring to FIG. 14 as in one embodiment of the present invention, shown is an axonometric view of a reciprocating blade device with 2 pairs of spokes below water level. In this situation the connection between spoke and parallel axle **15** is at both extremities 27, 32 of the parallel axle. By this way the parallel axis is held by a pair of spokes 35. This gives the balanced floating blade full freedom to rotate without interference of the spokes. The blade 30 does not need a special cutout to facilitate the free positioning of the blade. This construction (2 pairs of spokes) has the advantage of greater strength, but the disadvantage of more material used.

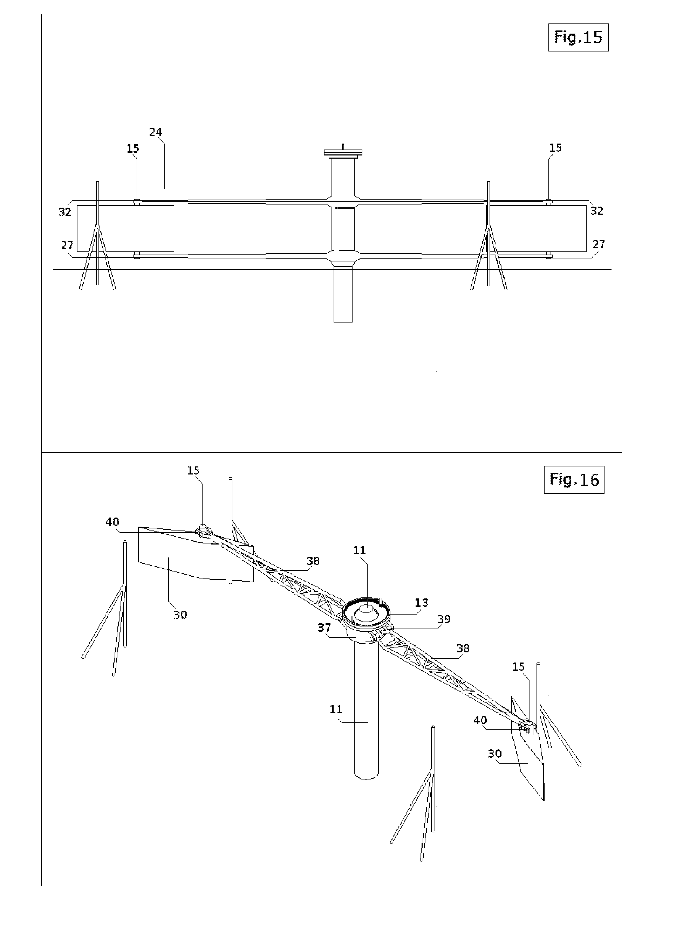

Referring to FIG. 15 as in one embodiment of the present invention, shown is a side view of a reciprocating blade device with 2 pairs of spokes below water level 24. The connection between spoke and parallel axle is at both extremities 27, 32 of the parallel axle 15. Further the same explanations apply as used in reference to Fig. 7.

Referring to FIG. 16 as in one embodiment of the present invention, shown is an axonometric view of a reciprocating blade device with 2 spokes above water level. Shown is a fixed central axle 11 with oscillating hub 37, the upper ring 13 of the hub being the starting gear wheel to transmit power. Shown are the spokes 38, illustrated here as a strong but open construction to withstand the force of waves and wind, being connected to the hub by a robust hinge construction 39, allowing vertical movement. This movement is needed to cope with different water levels (high tide, low tide) and with the influence of major waves at the surface. In this situation the connection 40 between spoke and parallel axle 15 is at the upper end of the parallel axle. This connection (see also Fig. 25) is a double hinge construction making it possible for the blade 30 to rotate around the planetary axis, but also to give it a certain degree of freedom to have its axle positioned in different vertical angles to the spoke, in order to keep the parallel position to the center axis when waves or change in water level cause the spokes to hinge vertically.

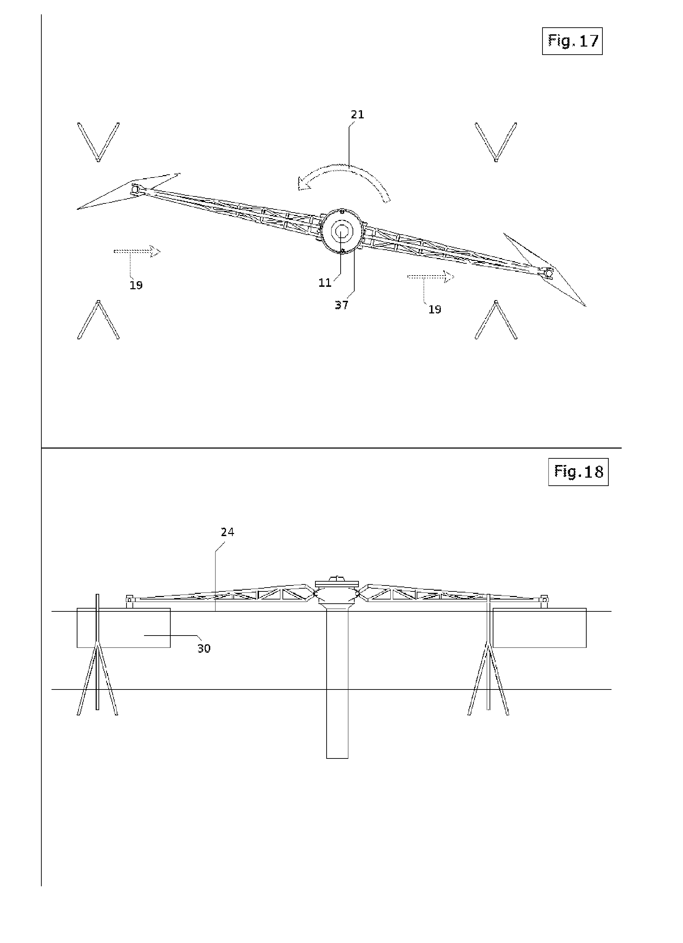

Referring to FIG.17 as in one embodiment of the present invention, shown is a top view of a reciprocating blade device with 2 spokes above water level. Further the same explanations apply as used in reference to Fig. 2 until Fig. 6.

Referring to FIG. 18 as in one embodiment of the present invention, shown is a side view of a reciprocating blade device with 2 spokes above water level 24. The floating blade 30 is also partly above water level, supplying better access for maintenance Further the same explanations apply as used in reference to Fig. 7.

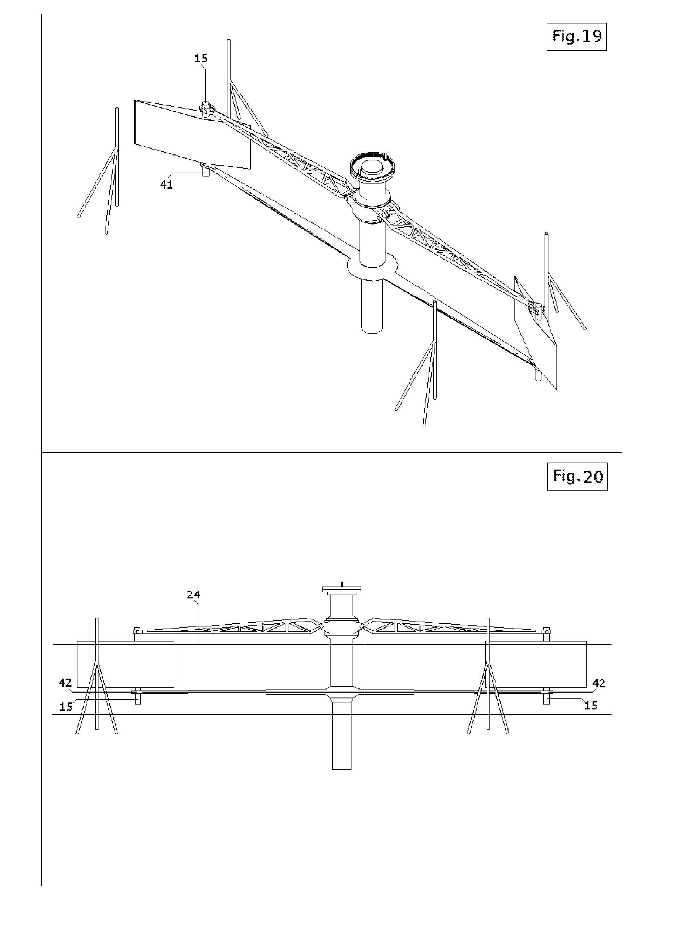

Referring to FIG. 19 as in one embodiment of the present invention, shown is an axonometric view of a reciprocating blade device with 2 pairs of spokes where of each pair of spokes one spoke is above water level and one spoke is below water level. In this situation the connection between spoke and parallel axle is at both extremities of the parallel axle 15. Concerning the construction above water level the same explanations apply as used in reference to Fig. 16. The spokes below water level are equipped with a sliding connection to the planetary axle, which has an extension 41, all this in order to cope with the up-and-down movements of the blades and the spokes above water level due to waves or tidal effects. This construction (2 pairs of spokes) has the advantage of greater strength, but the disadvantage of more material used.

Referring to FIG. 20 as in one embodiment of the present invention, shown is a side view of a reciprocating blade device with 2 pairs of spokes where of each pair of spokes one spoke is above water level 24 and one spoke is below water level. Shown are the sliding connection 42 and the extension of the parallel axle 15 to cope with the up-and-down movements of the blades and the spokes above water level due to waves or tidal effects. Due to the sliding connection the sinking weight of the underwater spokes cannot be compensated by the buoyancy of the blades, so these spokes themselves (by their construction or the materials used) have to be "weightless" in their fluid surrounding. Further the same explanations apply as used in reference to Fig. 7.

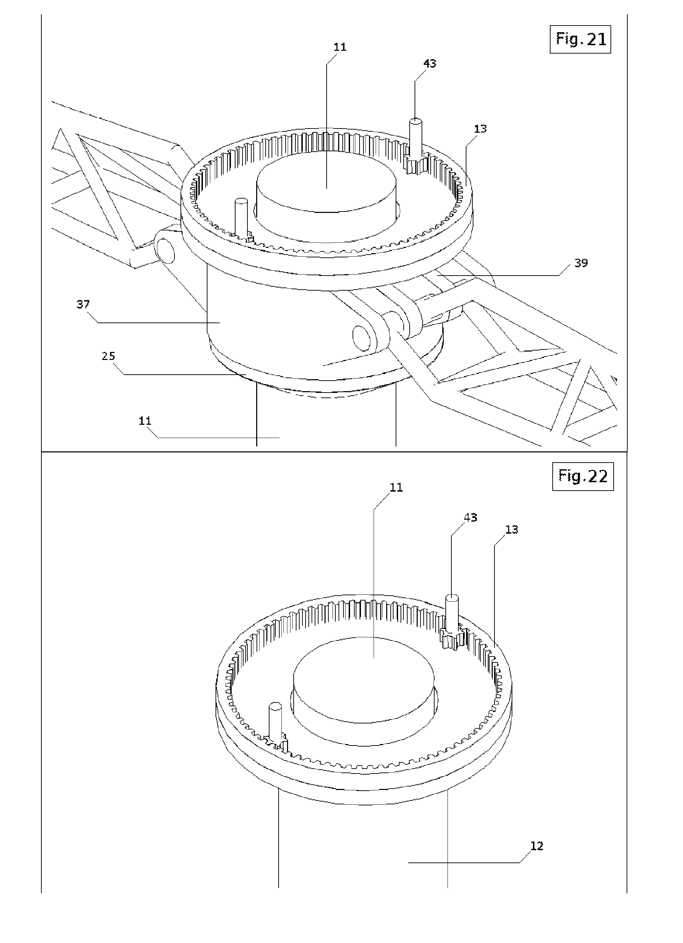

Referring to FIG. 21 as in one embodiment of the present invention, shown is an axonometric view of the starting gear wheel **13** and hinge construction **39** as a part of the central oscillating hub **37** resting on a bearing ring device **25** of a reciprocating blade device with spokes above water level. This illustrates the robustness of the hinge construction. Also shown are the small cogwheels and a part of their axles **43** that will transfer the rotation from the starting gear wheel to the gear unit housing (not shown here), which is mounted on the fixed central axis-pillar **11.**

Referring to FIG. 22 as in one embodiment of the present invention, shown is an axonometric view of the starting gear wheel **13** as a part of the central hub **12** of a reciprocating blade device with spokes under water level. This illustrates the positioning of the gear construction safely above water level. Also shown are the small cogwheels and a part of their shafts **43** that will transfer the rotation from the starting gear wheel to the gear unit housing (not shown here), which is mounted on the fixed central axis-pillar.

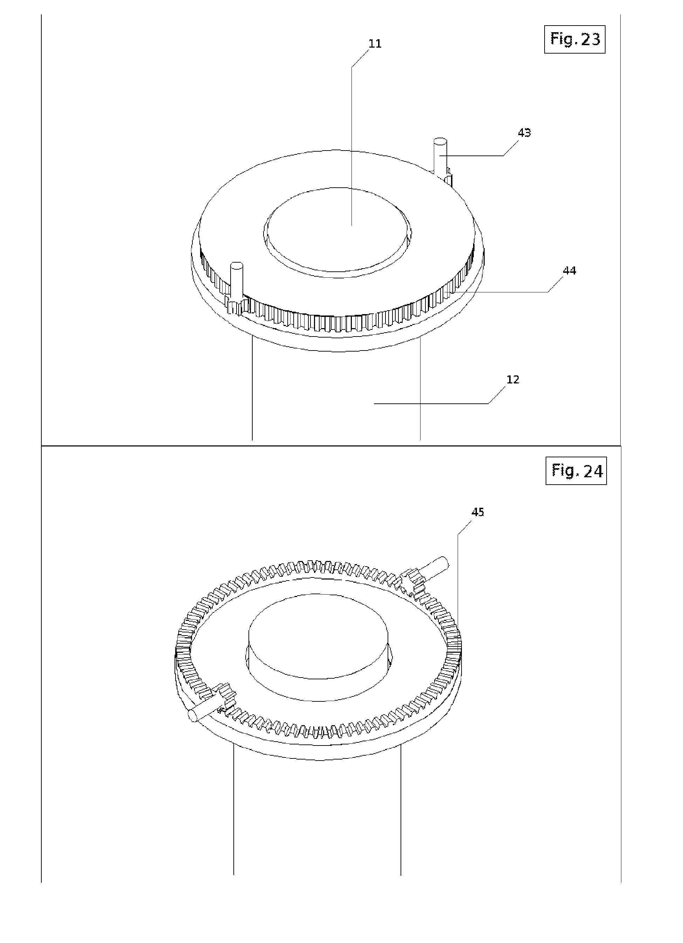

Referring to FIG. 23 as in one embodiment of the present invention, shown is an axonometric view of an external gear type starting gear wheel **44** being the upper part of the central hub of a reciprocating blade device. This illustrates that the starting gear wheel can also be of the external gear wheel type.

Referring to FIG. 24 as in one embodiment of the present invention, shown is an axonometric view of a bevel gear type starting gear wheel **45,** being the upper part of the central hub of a reciprocating blade device. This illustrates that the starting gear wheel can also be of the bevel gear wheel type.

Referring to FIG. 25 as in one embodiment of the present invention, shown is a drawing of an axonometric view of the hinge-2 joint (vertical parallel axle **15** and horizontal axle 46) between an above water level spoke 38 and a balanced floating blade 30. This illustrates the robustness of the hinge construction.

Referring to FIG. 26 as in one embodiment of the present invention, shown is a top view of the internal stop device 28 permitting the blade 17 to oscillate only in a predefined range around the parallel axle 15. The stop 28 is connected to the parallel axle 15, using a torque axle dampening construction with rubber or synthetic cords 41 to prevent the damaging of the blade or the stop by blocking the rotation too abruptly.

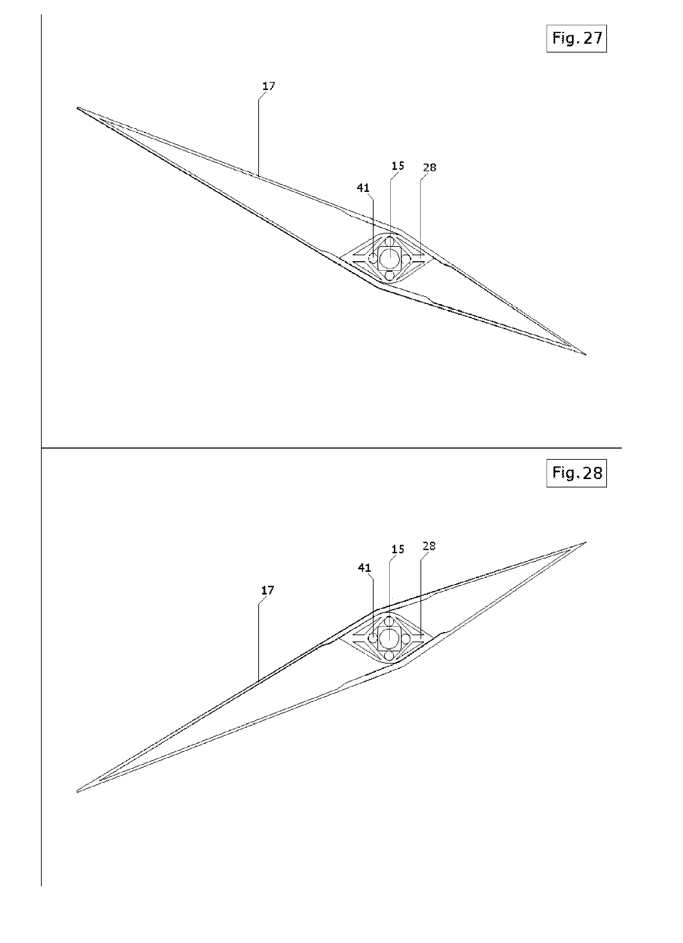

Referring to FIG. 27 as in one embodiment of the present invention, shown is a top view of the internal stop device **28** at the moment of stopping the clockwise rotation of the blade **17 .** The stop **28** is connected to the parallel axle **15,** using a torque axle dampening construction with rubber or synthetic cords **41** to prevent the damaging of the blade or the stop by blocking the rotation too abruptly.

Referring to FIG. 28 as in one embodiment of the present invention, shown is a top view of the internal stop device **28** at the moment of stopping the counter-clockwise rotation of the blade **17.** The stop **28** is connected to the parallel axle **15,** using a torque axle dampening construction with rubber or synthetic cords **41** to prevent the damaging of the blade or the stop by blocking the rotation too abruptly.

Referring to FIG. 29 as in one embodiment of the present invention, shown is a drawing of axonometric view of an internal stop device **28** ,connected to the parallel axle **15,** using a torque axle dampening construction, in which the parallel axle is partly shaped as a square block **49** and rubber or synthetic cords **41** dampen the stopping action to prevent the damaging of the blade or the stop by blocking the rotation too abruptly.

Referring to FIG. 30 as in one embodiment of the present invention, shown is a drawing of a sectional plane view **47** of a below water level spoke. This illustrates that these spokes when oscillating are designed to produce minimum drag, when cutting their way through the fluid..

Referring to FIG. 31 as in one embodiment of the present invention, shown is a selection of the main elements of an application of this invention, drawn separately to give better insight, also added are the main elements of a possible superstructure, which illustrates the possibility to transfer the power from the central starting gearwheel **13** to known devices nowadays used by the wind-turbine industry. Shown is the fixed central pillar **11** functioning as the central axle; the spoke-hub **12** oscillating around the central axle **11 ,** the starting gear wheel **13** being the upper part of the oscillating spoke-hub. As shown the possible superstructure is formed by the basic gear unit housing **56** in which the oscillating movement is transformed into a relatively high speed rotating movement. The basic gear unit housing **56** is situated on the starting gearwheel cover **55,** both to be fixed at the fixed central pillar 11 forming a platform on which a foot 57 for the nacelles 59 holds a belt or chain driven transmission 60 to the drive shafts of the standard windmill generators in the nacelles. Shown are the holes 62 for the shafts that transfer the power from the gear house to the foot of the nacelles. Also shown are the holes 61 through which the cog wheel shafts 43 transfer the oscillating power from the starting gearwheel 13 to the gear house.

While the present invention has been related in terms of the foregoing embodiments, those skilled in the art will recognize that the invention is not limited to the embodiments depicted. The present invention can be practiced with modification and alteration within the spirit and scope of the appended claims. Thus, the description is to be regarded as illustrative instead of restrictive on the present invention.

## Claims

1. A reciprocating blade system device, comprising: a central axle unit consisting of a fixed shaft and a spoke hub in oscillating motion, the spoke hub having spokes that have a certain degree of vertical flexibility to cope with differences in fluid level or vertical fluid movements, each spoke holding a minimum of one blade or one set of blades oscillating around a planetary axle parallel to the central axis, the parallel axles or the hub spokes being equipped with a stop or a set of stops that will limit the rotation of the blades and will position the blades when in contact with bumping posts on either side of the reciprocating range, in a position to be effectively pushed away from the contacted bumping post by the fluid current, causing the blades to reciprocate continuously in the open space between the bumping posts, forcing the central spoke hub to oscillate around a fixed central axle, the blades having adjustable buoyancy to support the construction, especially by compensating the lack or surplus of buoyancy of the hub and spoke framework, and by this creating a situation of desired weightlessness of the construction, making it possible to realize a leverage effect much larger than existing devices using a reciprocating or oscillating blade system, and by this introducing leverage as a dominant characteristic for harnessing the power of relatively slow currents by reciprocating or oscillating blade systems.

2. A reciprocating blade system device of claim 1 wherein the spoke hub is oscillating around a fixed pipe or pillar driven into the bottom of a sea, river, lake, channel or other streaming water containing geographical phenomenon, or oscillating around a fixed pipe or pillar supported by a foundation construction on the bottom of a sea, river, lake, channel or other streaming water containing geographical phenomenon.

3. The reciprocating blade system device of claim 1 wherein the spoke hub is oscillating around a fixed pipe or pillar mounted on a on or below the water surface floating body, held in position by anchors connected to the bottom of a sea, river, lake, channel or other streaming water containing geographical phenomenon.

4. The reciprocating blade system device of claim 1 wherein the spoke hub is extended with an upper ring to be used as the starting gear wheel to transfer power to one or more electric generators.

5. The reciprocating blade system device of claim 1 wherein the rotor spokes are fixed connected to the spoke hub, but vertically flexible by their structure and materials used, like the wings of large airplanes

6. The reciprocating blade system device of claim 1 wherein the connection between spoke hub and spokes is vertically flexible by the use of a hinge construction.

7. The reciprocating blade system device of claim 1 wherein the connection between blades and spokes is vertically flexible by the use of a hinge construction.

8. The reciprocating blade system device of claim 1 wherein the bumping posts are mounted on a on or below the water surface floating body, held in position by anchors connected to the bottom of a sea, river, lake, channel or other streaming water containing geographical phenomenon.

9. The reciprocating blade system device of claim 1 wherein the rotor spokes are situated above the water level and wherein the balanced floating blades are situated under or almost completely under the water level.

10. The reciprocating blade system device of claim 1 wherein the rotor spokes as well as the balanced floating blades are situated under the water level.
